(19) Europäisches Patentamt
European Patent Office
Office européen des brevets

(11) Publication number: 0 190 646
A1

(12) # EUROPEAN PATENT APPLICATION

(21) Application number: 86101112.0

(22) Date of filing: 28.01.86

(51) Int. Cl.⁴: F 24 C 7/08
G 02 F 1/13, G 02 F 1/133

(30) Priority: 01.02.85 IT 1934285
01.02.85 IT 2068085 U
01.02.85 IT 2068185 U

(43) Date of publication of application:
13.08.86 Bulletin 86/33

(84) Designated Contracting States:
DE FR GB

(71) Applicant: ITALORA S.p.A.
Strada 4 Palazzo q5
I-20089 Rozzano Milanofiori(IT)

(72) Inventor: Oliveri, Lucio
Via Scheiwiller 1
I-20139 Milano(IT)

(74) Representative: Dr. Ing. A. Racheli & C.
Viale San Michele del Carso, 4
I-20144 Milano(IT)

(54) **Heat insulation device, suitable for control and operating units in cooking appliances.**

(57) A heat insulation device is described which is especially suitable for control and operating units and/or systems (electronic, electrical, electromechanical or mechanical), inserted into household cooking appliances.

According to one embodiment said device comprises a part with at least one side facing the ambience outside the main appliance. Several airtight chambers (13, 15, 17) are prearranged in the device, and are obtained by prearranging panels (16) and/or inner intermediary containers (14), which form a number of interspaces of air with a cumulative heat insulation effect.

The components which are more sensitive to high temperatures, preferably consisting of viewers (22) or liquid crystals and relative activating components, are placed in the part of the device with at least one side facing the outside ambience; said side may be movable relative to the rest of the device.

FIG.4

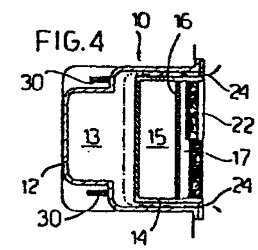


EP 0 190 646 A1

Applicant:
ITALORA S.p.A.
IT - 20089 ROZZANO MILANOFIORI
Strada 4, Palazzo q5

**"HEAT INSULATION DEVICE, SUITABLE FOR CONTROL AND OPERATING UNITS IN COOKING APPLIANCES"**

The subject of this invention is a new heat insulation device for electronic control and operating units in household cooking appliances.

Said electronic units are composed of a power device, suitable for connecting and disconnecting one or more electrical loads, a control logic circuit made according to the C-MOS technique (complementary metal oxide semiconductor technique), and a digital display, for example, made according to the LCD technique (liquid crystal display) with relative activating components.

In particular, said device can be applied to a unit comprising a logic part and a display composed of components which are especially sensitive to high temperatures and, therefore, must be protected against undesired temperature peaks.

In cooking appliances where the control and operating units regulate cycles which are normally within a two-hour period and wherein the operating temperature can reach +125°C, the procedure is still as follows:

a) the control and operating units are placed in heat-insulated sections of additional volume, involving increased costs due to additional containers and electrical interconnections.

b) Alternatively, forced ventilation is produced between the appliance suitable for working at a temperature of +125°C and the controls accessible to the user, so that the temperature of said controls does not exceed the temperatures provided for by the regulations in force. In addition to the cost of ventilation there are the higher costs for the mechanical, electromechanical and electronic components which make up the appliance.

c) Alternatively, the control and operating unit, made up of electrical and electronic components, is placed in sections providing no additional volume, which are however thermally protected and far from the display and setting system. This implies the undesirable additional interconnections and separate fastenings which make repair or replacement complicated.

d) Alternatively, provision is made systematically to thermally insulate the inner parts at high temperature from the

accessible outer parts. This also involves high costs.

e) Lastly, provision is also made for the use of electronic digital displays, which have electronic and electromechanical components resistant to +125°C, known to be more expensive.

Therefore, the object of this present invention is to provide a heat insulation device, at limited additional cost, which provides progressively greater thermal protection for the components contained therein, placed in sections which are increasingly further away with respect to the axis of the directrix along which the heat flows.

A further object of this invention is to make a device of the type described above, which has at least one part almost completely immersed in the temperature field of the ambience external to the cooking appliance, so as to permit the visual display unit and relative activating components to function reliably.

A further object is to make a device which has at least one movable part relative to a part engaged with the cooking appliance, so that said movable part is placed, during use, in a protected position away from the heat source.

The object is carried out by providing for the power device, control logic circuit, digital display and relative activating components to be housed in at least two separate chambers, which are also airtight. Said chambers are obtained by prearranging internal intermediary panels or sub-containers next to one another, relative to the axis of the directrix along which the heat flows. They thereby form multiple interspaces of air and provide a cumulative effect of heat insulation, such as to allow progressively greater thermal protection of the chambers to be obtained, as a function of the relative position of each one thereof and with respect to the axis of the directrix along which the heat flows.

As an alternative, three separate chambers can be obtained by suitably arranging several containers or intermediary panels inside a main casing.

Other solutions provide for the structure of the container described to be such as to allow the inflow of air, coming from the outside of the cooking appliance. Said inflow of air is intended to flow over the panels of the chamber containing the components of the device, described above as sensitive to heat, so that the relatively cooler air flow reduces the temperature of the air coming from inside the cooking appliance, helping to lower the temperature in the chamber. Where permitted by the difference between the two temperatures, this cooling also occurs through the physical principle of heat convection.

According to another variation, provision is made for the container of at least one of the said chambers with the components more sensitive to heat to be pivoted on a projecting part,

possibly thermally insulated, of the wall of the cooking appliance. In particular, the upper side thereof may be pivoted lengthwise to the vertical plane of the appliance, so that said upper side can be turned from the vertical to the horizontal plane and permit easy reading of the display when intervening on the controls. This is also the case, even where the horizontal plane, on which the above-said pivoted side is engaged, is located at a much lower level than the ergonomically optimal height for the user.

According to a variation, the container for the LCD display and the C-MOS control logic, with an especially reduced thickness and forming a chamber which is separate from the remaining part, has at least one area of limited size relative to the overall size of the container by means of which it is engaged to and integral with the outer wall of the cooking appliance. This is done in such a way that the engaging of the chamber and the electrical connection to the power section can only be carried out through the above-said area, whereas the rest of the container is immersed in the temperature field of the outside ambience.

According to another variation, several areas of limited size are provided, made up of internally hollow appendixes, through which the electrical connecting cable may possibly pass.

Preferred embodiments of the invention will now be indicated with reference to the accompanying drawings, in which:

Figs. 1 and 2 show a front elevation and cross section respectively along the plane II-II of a first embodiment of the insulation device according to the invention;

Figs. 3 and 4 show a front and sectional view respectively along the plane IV-IV of a second embodiment of the invention;

Figs. 5 and 6 show a perspective and sectional view respectively of a further embodiment of the invention;

Fig. 7 shows a qualitative trend of the temperature inside the device which is the subject of this invention;

Fig. 8 is a front view of another embodiment of the device according to the invention;

Fig. 9 shows a front view of a first variation of the embodiment in fig. 8, according to the invention;

Fig. 10 represents a second variation of the embodiment in fig. 8;

Fig. 11 is a detail of the variation in fig. 10;

Figs. 12 and 13 show another embodiment according to the invention;

Fig. 14 is a front view of a cooking appliance, in particular an oven, incorporating a further embodiment of the device according to this patent application; said device is shown in the retracted position;

Fig. 15 is a side view of the said apparatus, seen as from the left in fig. 14; the device is shown in the extended position;

Fig. 16 is a front view, enlarged relative to fig. 14 and discontinuous, showing the device;

Fig. 17 is a side view from the left as in fig. 16, or a view of an enlarged detail of fig. 15; part of the left side wall of the appliance has been removed to show the elements therebehind.

Referring to figs. 1 and 2, the front surface 11 of a cooking appliance can be seen, provided with an opening in which the heat insulation device 10, subject of this invention, is placed. Its front surface has a display to which the relative activating components are connected (display logic). There are also program-setting keys 21. In the upper part of the figure, over display 22, an alternative is shown in which the display is protected by a transparent cover.

The device according to the invention, shown in cross section, is made up of a set of containers and intermediary separating panels: an outer container 12, an intermediary container or sub-container 14 and an intermediary partition panel 16 respectively. These define separate chambers, distinct from one another, as shown in fig. 2. A chamber 13 is therefore delimited between the outer container 12 and the intermediary container 14.

Chamber 15 is delimited by intermediary container 14 and intermediary panel 16. Lastly, chamber 17 is delimited by display 22 and panel 16. According to this arrangement, with regard to the device inserted in a cooking appliance, the main axis along which the heat flows is considered to be that indicated by the arrows. Therefore, chamber 17 will be the one furthest away from the heat source and with a lower temperature than the others.

According to the foregoing description, it is assumed that the heat is propagated mainly by radiation, whereas the amount of heat propagated by conduction is negligible. Therefore, the chambers are arranged next to each other along the main line of transmission by radiation.

The embodiment shown in figs. 3 and 4 illustrates the front openings through which "ambient" air is fed into one or more chambers. In this embodiment air penetrates into chamber 13. However, this air may also pass through several chambers by means of suitable connecting openings in container 14.

In the solution shown in figs. 5 and 6, side openings 26 may be provided. These allow natural ventilation inside chamber 13. Where there are communicating openings 26a, the air also penetrates into chambers 15 and 17, such as to allow the inflow of air from the outside in the direction indicated.

The type of material used in making the containers and intermediary panels, their thickness and reciprocal relation-ships between the various chambers have been selected in such a way that a qualitative diagram of the type shown in fig. 7 is obtained.

According to a preferred embodiment, thermoplastic resin, for example polycarbonate, is used with a thickness of about 2 mm. Moreover, the volume of intermediary chamber 15 is approx. half the volume of chamber 13, and that of chamber 17 is approx. one quarter of the volume of chamber 13.

As the chambers are arranged at different distances from the axis of the directrix along which the heat is propagated, they are at different temperatures and may be used for housing components, especially electronic ones, which are sensitive to the ambient thermal conditions.

Therefore, in the electronic device which is to be inserted provision may be made, for example, for its logic part to be produced using the C-MOS technique (complementary metal oxide semiconductor technique) and comprising a digital display, produced using the LCD technique (liquid crystal display). In this case, which is not binding, the LCD display 22 is in chamber 17, whereas the C-MOS logic is placed in chamber 15. The power section is housed in chamber 13. The FASTON fastenings are indicated by 30.

In this way one or more interspaces of air are formed, enclosed in systematically adjacent chambers so that the thermal barrier effect produced by each of these interspaces is cumulative.

According to a variation in the structure of the container, on the other hand, an inflow of air is permitted, coming from the area outside the cooking appliance. This flow of air which, for example, flows over the inner side of the wall with which the thermally sensitive parts of the device are integral, reduces the temperature of the air coming from inside the cooking appliance, and helps to lower the temperature of the ambience wherein said wall holding the sensitive parts is immersed.

Figs. 8-13 show other embodiments of the invention, in which the container for the electronic device (for example, made with the C-MOS technique) with digital display (for example, made with the LCD technique) and relative activating components are almost completely immersed in the temperature field of the outside ambience.

Referring to figs; 8 and 9, an electronic device 110 for the control and operation of household cooking appliances is applied to a wall of said household cooking appliance. Pshbutton controls 114 are provided on the front.

According to a first variation as shown in fig. 9, said electronic device is fitted so as to protrude from a peripheral surface 118 of the cooking appliance. A layer 124 of heat-insulating material, for example asbestos, is placed between the wall 118 and the base 120 of the container 110. Holes 120a and 124a are provided in the base 120 of the container and in the layer of insulating material 124, through which a connecting cable 121 to the power device is passed. As it is less sensitive to high temperature, said device may be housed in a separate chamber 111 in the appliance itself, immediately adjacent to the area where the container 110 is located.

According to another variation, projecting areas or appendixes 116 may be provided on the base 120 of the container 110. Only these appendixes 116 are in contact with the wall 118 of the cooking appliance, which reaches a rather high temperature, between 75°C and 125°C, when being used.

According to fig. 11 the appendixes 116 are obtained from the base 120 of the container and the side wall 122 thereof. A hole is provided wherein a cable support 118 is inserted and through which the cable 121 can pass. Where required, a washer 126 made of insulating material is fitted. Four appendixes may be provided. Of course, the cable passes through only one of these.

As can be seen in figs. 9 and 10, the heat of the cooking appliance, the directrix whereof is indicated by the arrows, can, in fact, only be transmitted by conduction, by the wall 120 (Fig. 9) or by the appendixes 116 (Figs. 10 and 11). Basically, the temperature of the container 110 is maintained by air circulating from the outside ambience in which it is immersed. In the embodiment shown in fig. 10 the air circulates at the back between the wall 118 and the base 120 of the container.

It is clearly evident that the device can be kept at a different temperature, and one which is much lower than the wall of the cooking appliance.

Referring to figs. 12 and 13, a third variation is shown wherein the device is engaged with a support 131, integral with the walls of the cooking appliance to which it is applied, said appliance being at a temperature between 70°C and 125°C. The device is pivoted by means of a pins 132 to the support 131 and can rotate freely on them from a vertical position, against the wall of the cooking appliance, to a sloping position relative to the vertical and, at the most, to a nearly horizontal position. A bracket 134 is provided which rests on a protrusion 133 from the support 131. The support may be made from insulating material. Said bracket 134, resting on the support, holds the device at an inclined angle of about 45° from the vertical. In this way the display and controls are easy to read and operate and, in any case, a device is obtained which is well positioned from an ergonomic viewpoint.

In this case also, the container 110 is almost completely immersed in the temperature field of the outside ambience. If said container is held at an inclined angle from the vertical, heat transmission by conduction in the direction indicated by the arrows takes place only through the upper side, lengthwise to the vertical plane. It is therefore limited as in the other variations. In this case the container 110 is immersed solely in the ambience outside the cooking appliance for the desired period only or, at he most, for determined cyclical periods.

Figs. 14-17 refer to a further embodiment of the device according to the invention, in which the container for the components more sensitive to the temperature can be positioned so as to be almost entirely immersed in the surrounding ambience, and therefore at a temperature considerably lower than that of the cooking appliance. This solution, together with that in figs. 12 and 13, has the advantage of making it very easy for the user to operate, wherever it is fitted in a kitchen.

An appliance 210 for household use, generally a cooking appliance, for example, an oven, is illustrated in the drawings. It comprises a front wall 212, side walls 213 and 214, a back wall 215 and an upper wall 216. A cooking space, indicated by 220, is closed by a door 222 with handle 223. A frontal strip 224 is fitted thereabove.

A recess 226 has been made in an area of the frontal strip 224, in which a display and/or control panel 228 is housed.

The panel 228 comprises at least some of the following elements: function displays, for example, clock 232, timer 230, temperature indicator 234, inspection holes 236; control and setting pushbuttons 238.

Further supplementary fixed controls are fitted, for example, in another area of the frontal strip.

The panel 228 is pivoted to the appliance at 242 in any known way, preferably along a horizontal axis, so that it swings and can be moved into a retracted position, at least partly inside the recess 226 wherein it preferably lies flush against the surface of the strip 224; and into one or more extended positions inclined relative to said strip 224 by rotating the panel through set angles around the axis 242. However, within the scope of this patent application, different types of articulated assembly are possible for the said panel, for example: by pivoting it on a lower horizontal axis rather than an upper one; or by means of a system of levers or articulated parallelogram. It is preferable for the panel to have side panels 244 (only one thereof can be seen in figs. 15 and 17) fitted with engaging meaens, like for example notches or holes 246, for an engaging element (not shown), for example a spring catch means held by the wall of the appliance. Said engaging element permits each of the possible panel positions at an inclined angle to be selected and made stable.

The panel 228 is connected to the electrical system of the power-activating part located inside the cooking appliance. It is preferable to provide a connection by means of a flexible printed circuit (flat board), indicated by 247. In this case also, the activating part is housed in a chamber 211 next to said panel 228.

It is preferable for the recess 226 to have a greater extension than the panel 228, so as to permit the user to insert his hand and easily grasp the panel in order to tilt it.

ITALORA S.p.A.

IT - 20089 ROZZANO MILANOFIORI

## CLAIMS

1. A heat insulation device, especially suitable for control and operating units in cooking appliances, said control and operating units comprising at least one power device, suitable for connecting and disconnecting one or more electrical loads, and a control logic circuit, as well as at least one digital display (22, 112, 232, 230, 234), in which said power device and display are housed in two separate chambers; characterized in that the two said chambers (13, 17; 111, 110; 211, 218) are placed next to each other along the axis of the directrix along which the heat flows, the chamber for the power device (13; 111; 211) being located inside the cooking appliance, whereas the chamber (17; 110; 228) housing the display is positioned with at least one part turned towards the outside ambience, and further away relative to the axis of the directrix along which the heat flows; the two chambers being distinguished at least by a separating panel, thereby obtaining a progressively greater thermal protection of the components housed in the chamber, as a function of the relative position of each one thereof.

2. A device according to claim 1, characterized in that the said two chambers (13, 17) are obtained inside a container (12) by prearranging at least one intermediary inner panel.

3. A device according to claim 1, characterized in that at least one intermediary container (14) is arranged therein, one panel of said container being engaged with the outer part of the main container.

4. A device according to claim 2 or 3, characterized in that at least three separate chambers (13, 15, 17) are delimited.

5. A device according to claim 2 or 3, characterized in that the chambers (13, 15, 17) do not communicate in any way whatsoever.

6. A device according to claim 2 or 3, characterized in that at least one panel of the main container is provided with at least one front opening (24), suitable for causing an exchange of air between at least one of the inner chambers and the ambience outside the main container where there is a sufficient difference in temperature between the two ambiences, said exchange of air takes place according to the principle of heat convection.

7. A device according to claim 2 or 3, characterized in that side openings (26) are provided for the exchange of air between at least one of the inner chambers and the outside.

8. A device according to claim 6 or 7, characterized in that at least one opening (26a) is made in at least one panel of the intermediary container (14), so as to permit the exchange of air between at least one of the chambers inside the main container and the ambience outside thereof.

9. A device according to claim 1, characterized in that said display (12) is of the liquid crystal (LCD) type.

10. A device according to claim 1, characterized in that said control logic circuit and display are arranged in a container (110) of reduced thickness provided with at least one small area (120; 116; 132) by means of which the outer wall (118) of the controlled cooking appliance is engaged, as well as being electrically connected thereto, such that the container (110) is immersed for the most part in the temperature field of the ambience outside the cooking appliance, althrough it is integral therewith and electrically connected thereto.

11. A device according to claim 10, characterized in that said areae consists of at least one panel (120) of the container (110), which is engaged with the outer wall (118) of the cooking appliance by means of a layer of insulating material (124).

12. A device according to claim 10, characterized in that said area consists of at least one appendix (116) protruding from the container (110), integral with the front surface (118) of the cooking apparatus, said appendix (116) being hollow inside an through which the cable (21) interconnecting with the power section can pass.

13. A device according to claim 12, characterized in that a layer of insulating material (126) is placed between the appendix (116) and the panel of the container (118).

14. A device according to claim 10, characterized in that said area consists of appendixes with a pin (132), which are suitable for being inserted into holes in a support (131), integral with the surface of the cooking appliance to which it is applied, such that the container (110) is pivoted and can swing at a preset angle from the vertical to the horizontal plane.

15. A device according to claim 14, characterized in that said support (131) has at least one part made of insulating materiarl.

16. A device according to claim 10, characterized in that the outer surface of the chamber housing the display comprises at least some of the following elements: control knobs (236), preselected function knobs (238), such as to form a display and/or control panel, fitted to said appliance in an articulated fashion.

17. A device according to claims 10, 14 or 16, characterized in that it comprises spring catch engaging means (246) between said panel (238) and said appliance, in order to make each of the possible tilted panel positions more stable.

18. A device according to claim 17, characterized in that said spring catch means comprise side panels, sunken notches therein and spring-pressed means which extend from the appliance into said notches.

19. A device according to claim 14, characterized in that said panel (238) comprises a control part, connected to the power-activating part inside the cooking appliance by means of a flexible printed circuit (flat board).

FIG.1

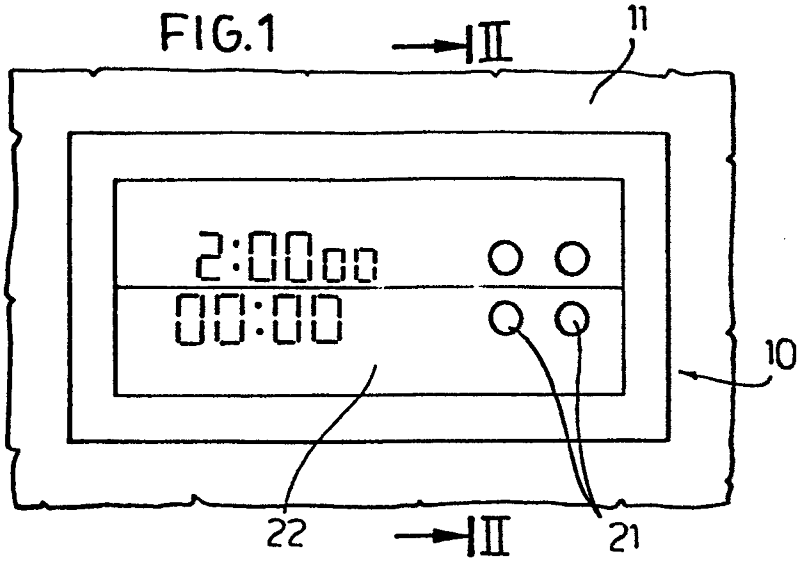


FIG.2

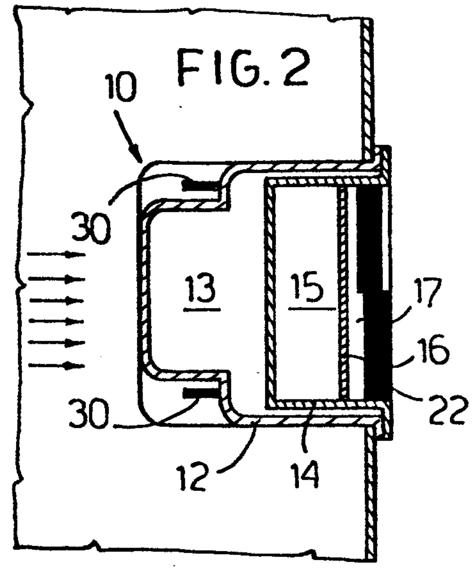


FIG.3

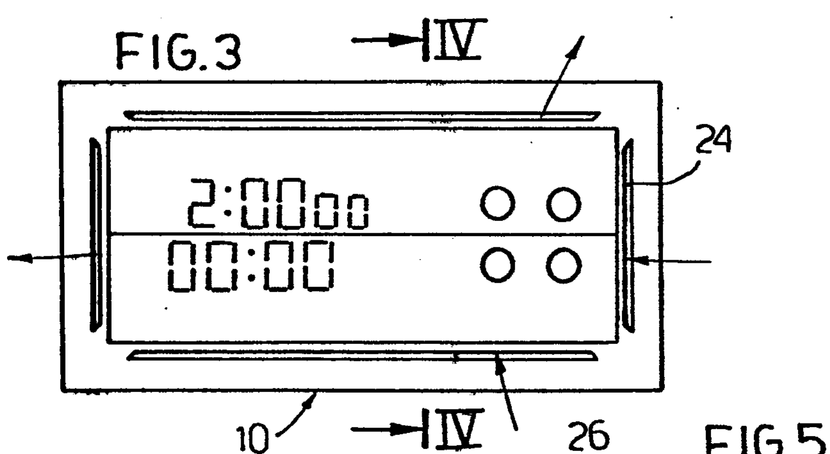


FIG.4

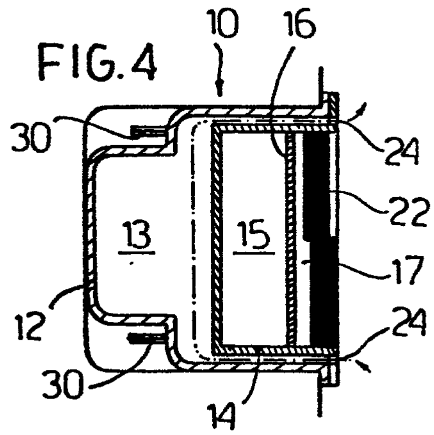


FIG.5

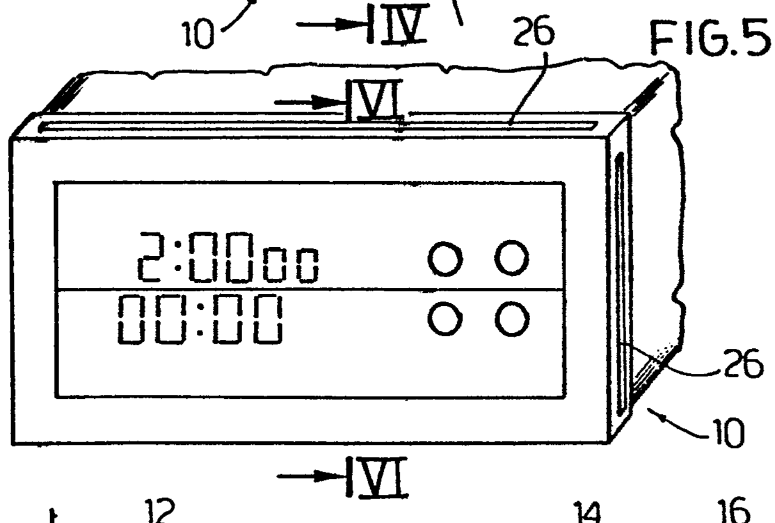


FIG.6

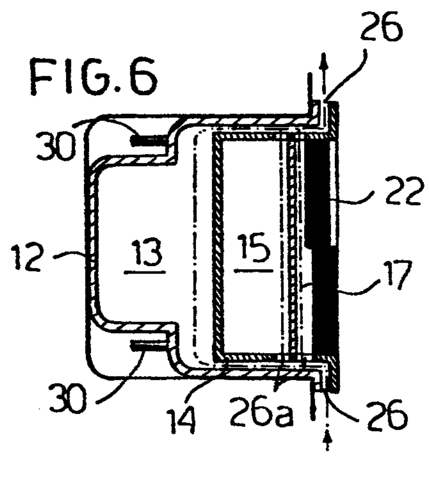


FIG.7

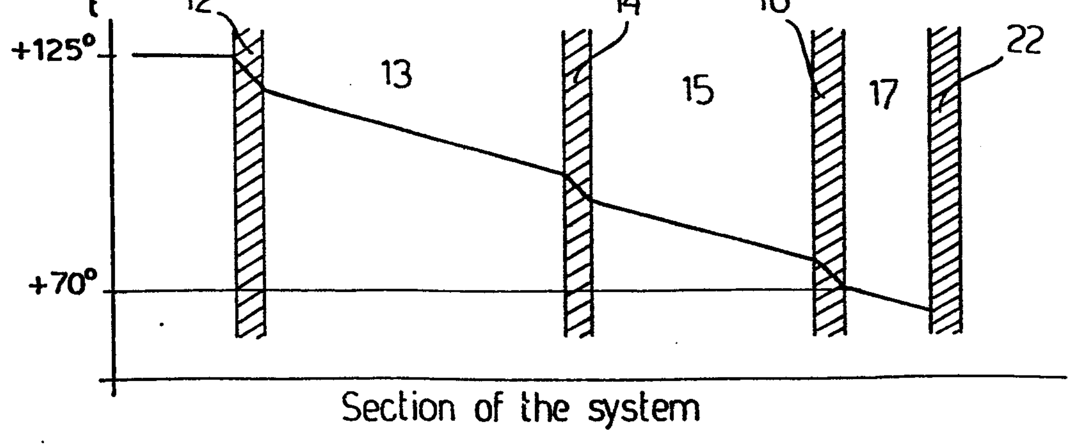

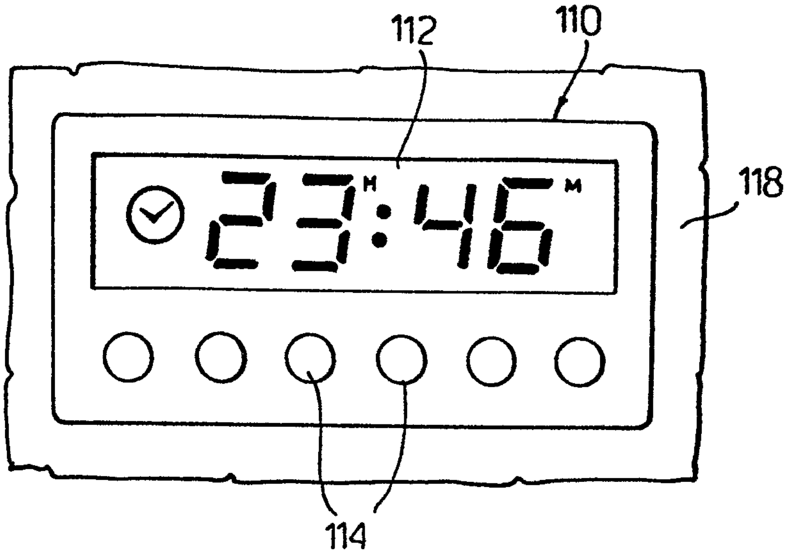


FIG.8

FIG.9

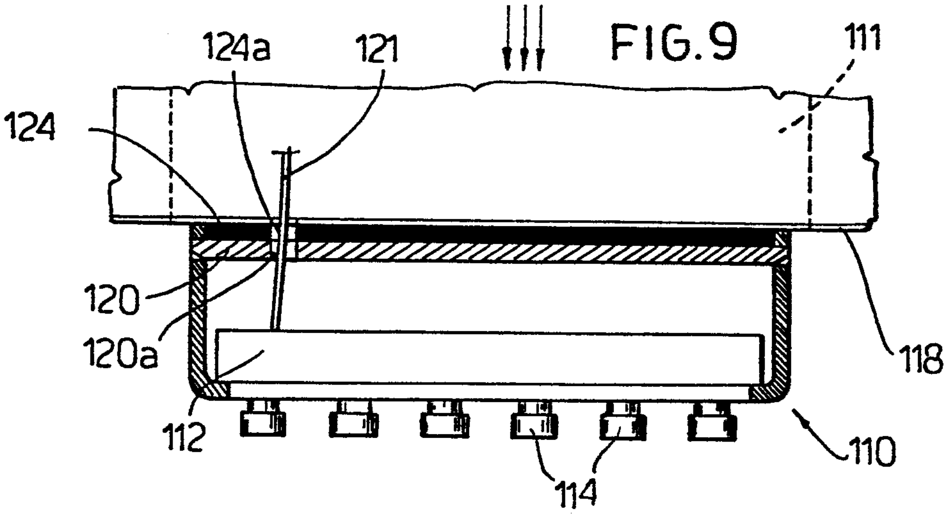


FIG. 10

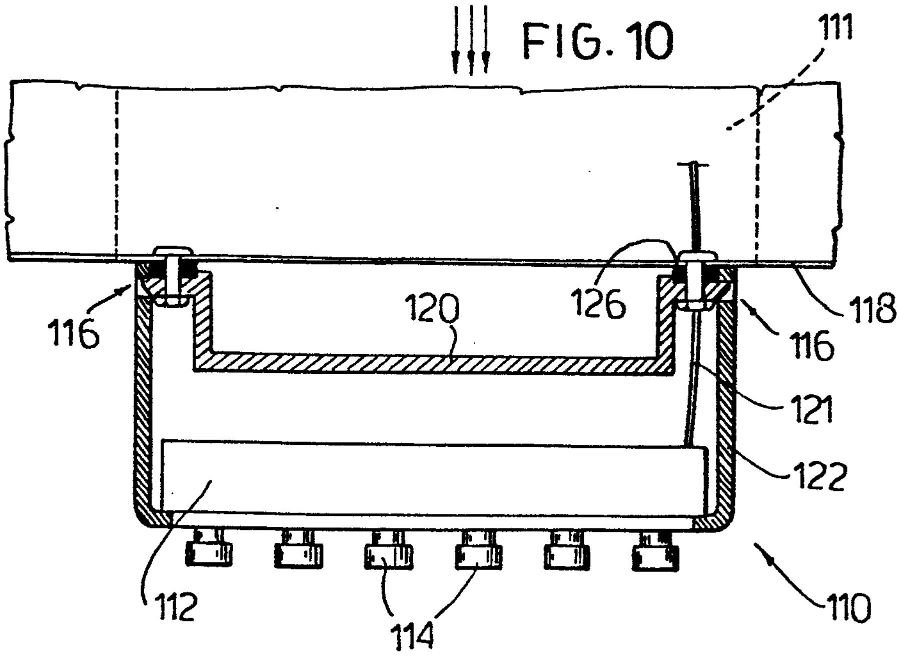

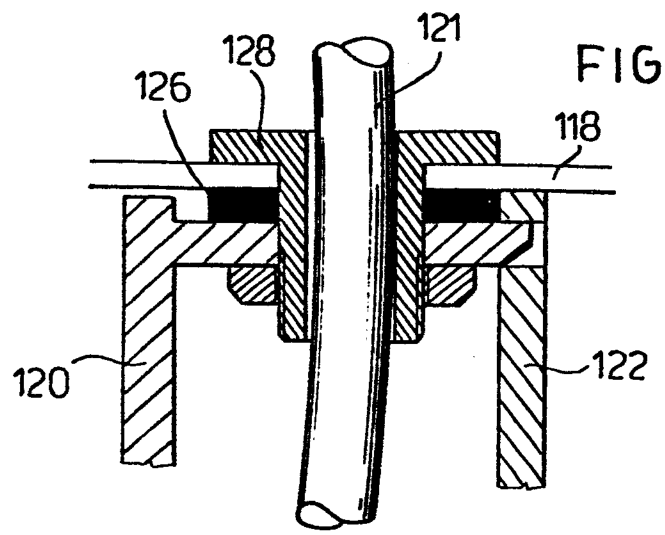


FIG. 11

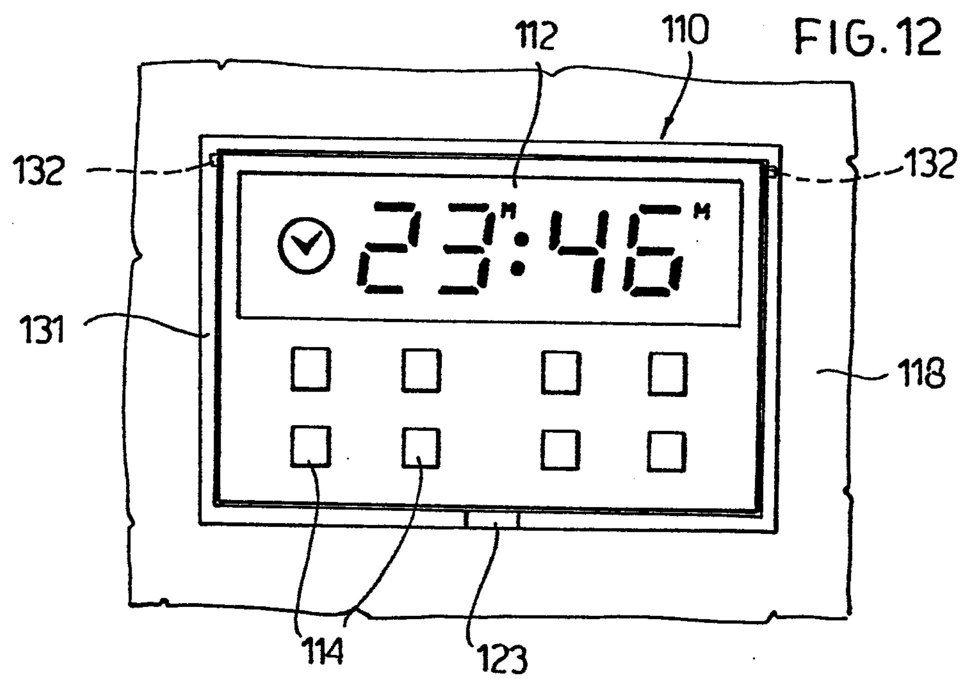


FIG. 12

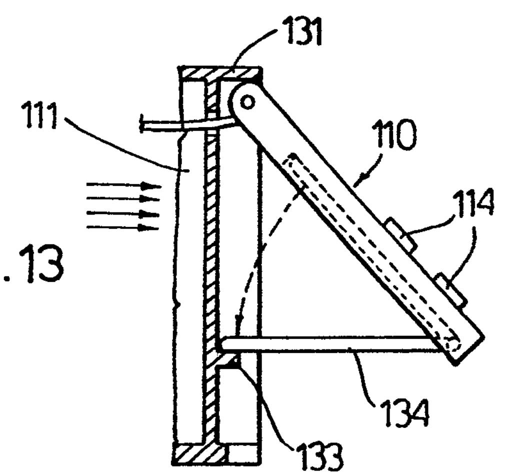


FIG. 13

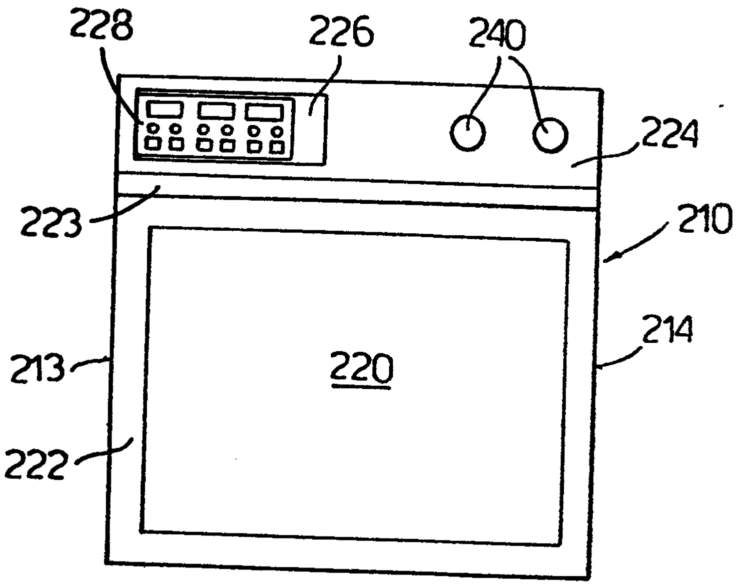


FIG. 14

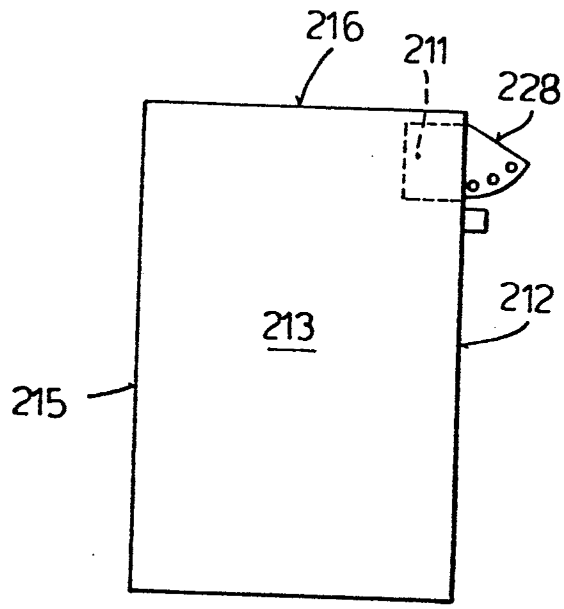


FIG. 15

FIG. 16

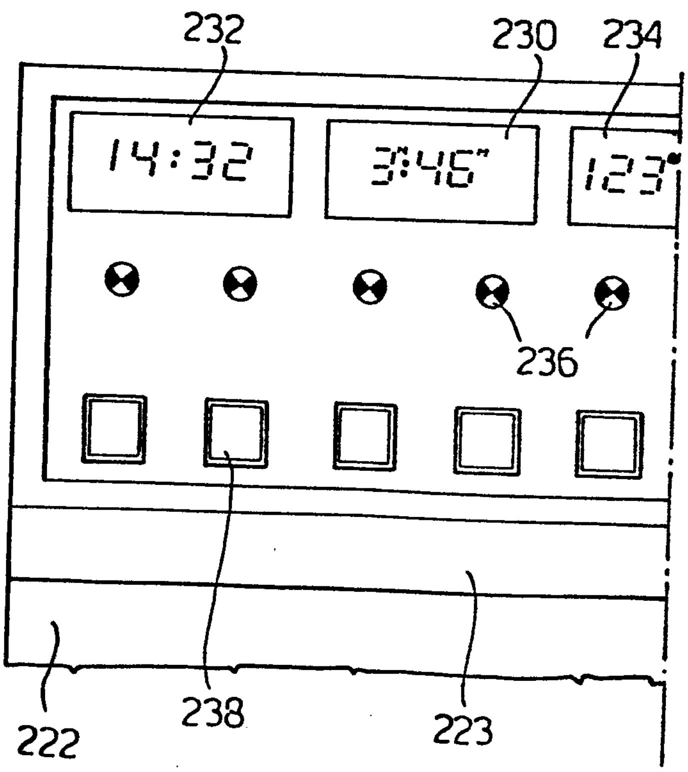


FIG. 17

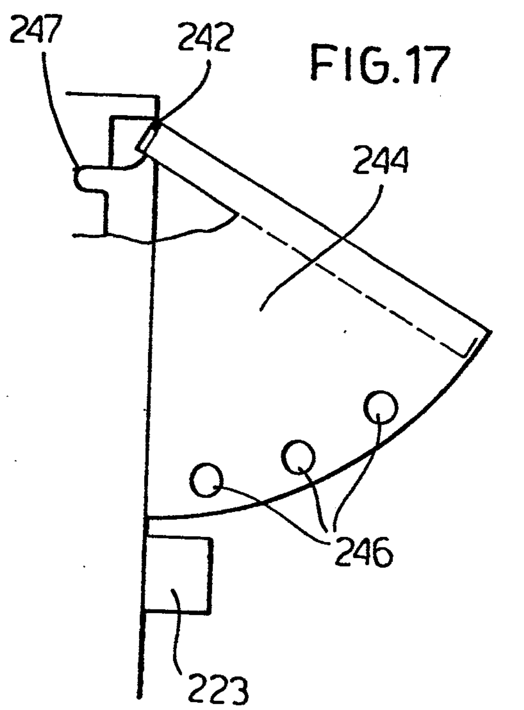

European Patent Office

# EUROPEAN SEARCH REPORT

0190646

Application number

EP 86 10 1112

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENTS ABSTRACTS OF JAPAN, vol. 8, no. 65, 27th March 1984, page 79 P 263; & JP - A - 58 211 742 (ALPS DENKI K.K.) 09-12-1983 * Abstract * --- | 1 | F 24 C 7/08<br>G 02 F 1/13<br>G 02 F 1/133 |
| A | FR-A-2 340 513 (OREGA) * Page 8, claim 1; figures 1-3 * --- | 1 | |
| A | EP-A-0 009 249 (EURO HAUSGERÄTE) * Page 7, lines 1-9; figures 1-4 * ----- | 1 | |
| | | | **TECHNICAL FIELDS SEARCHED (Int. Cl.4)** |
| | | | F 24 C<br>G 02 F<br>G 12 B<br>H 02 B |

The present search report has been drawn up for all claims

| Place of search | Date of completion of the search | Examiner |
|---|---|---|
| THE HAGUE | 09-05-1986 | VANHEUSDEN J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document